# EUROPÄISCHE PATENTANMELDUNG

(11) **EP 3 451 799 A1**
(43) Veröffentlichungstag der Anmeldung: **06.03.2019**
(21) Anmeldenummer: 18189535.0
(22) Anmeldetag: 17.08.2018
(51) Int. Cl.: H05B 37/02

(54) **BETREIBEN EINES BELEUCHTUNGSSYSTEMS**

(30) Priorität: 04.09.2017 DE 102017215441
(71) Anmelder: Tridonic GmbH & Co. KG, 6850 Dornbirn (AT)
(72) Erfinder: MOOSBRUGGER, Lukas, 6941 Langenegg (AT); MOOSMANN, Florian, 6835 Muntlix (AT); ROMANO, Fabio, 6850 Dornbirn (AT); LOCHMANN, Frank, 88147 Esseratsweiler (DE)
(74) Vertreter: Banzer, Hans-Jörg

(57) **Zusammenfassung**

Die vorliegende Erfindung betrifft ein Verfahren (90) zum Betreiben eines Beleuchtungssystems (21). Bei dem Verfahren wird eine Eigenschaftsinformation einer Person (80), welche sich in einem Beleuchtungsbereich eines Leuchtmittels (31) des Beleuchtungssystems (21) befindet, mittels einer Sensoranordnung (43) des Beleuchtungssystems (41) erfasst. In Abhängigkeit von der erfassten Eigenschaftsinformation der Person (80) wird automatisch eine Erkrankung der Person (80) bestimmt. In Abhängigkeit von der bestimmten Erkrankung der Person (80) wird automatisch eine Eigenschaft des Leuchtmittels (31) eingestellt.

## Beschreibung

### TECHNISCHES GEBIET

Die vorliegende Erfindung betrifft ein Verfahren zum Betreiben eines Beleuchtungssystems, welches beispielsweise in einem Privathaushalt oder an einem Arbeitsplatz verwendet wird. Die vorliegende Erfindung betrifft ferner ein Beleuchtungssystem, welches das erfindungsgemäße Verfahren verwendet.

### HINTERGRUND DER ERFINDUNG

Die zunehmende Automatisierung und Vernetzung von Beleuchtungssystemen bieten neue Möglichkeiten zur Steuerung und Verwendung dieser Systeme. Ferner bieten moderne Leuchtmittel, insbesondere Leuchtdioden (LED), die Möglichkeit, die Beleuchtung auf vielfältige Arten und Weisen einzustellen. Beispielsweise können neben der Helligkeit auch ein Frequenzspektrum, eine Abstrahlrichtung sowie eine Lichtverteilung eingestellt werden. Durch die Vernetzung von Beleuchtungssystemen können Räume oder Bereiche von Räumen oder Hallen spezifisch ausgeleuchtet werden. Beispielsweise können unterschiedliche Lichtszenen definiert und angesteuert werden.

Unterschiedliche Benutzer können jedoch unterschiedliche Leuchtcharakteristiken bevorzugen. Ursache hierfür können unterschiedliche Einsatzgebiete aber auch unterschiedliche Wahrnehmungen der Benutzer sein.

Aufgabe der vorliegenden Erfindung ist es daher, ein Beleuchtungssystem benutzerspezifisch zu optimieren.

### ZUSAMMENFASSUNG DER ERFINDUNG

Diese Aufgabe wird durch ein Verfahren zum Betreiben eines Beleuchtungssystems und ein entsprechendes Beleuchtungssystem gemäß der unabhängigen Ansprüche gelöst. Die abhängigen Ansprüche definieren Ausführungsformen der Erfindung.

Ein erfindungsgemäßes Verfahren betrifft das Betreiben eines Beleuchtungssystems. Bei dem Verfahren wird eine Eigenschaftsinformation einer Person, welche sich in einem Beleuchtungsbereich eines Leuchtmittels des Beleuchtungssystems befindet, mittels einer Sensoranordnung des Beleuchtungssystems erfasst.

Die Sensoranordnung kann beispielsweise eine Kamera umfassen, um beispielsweise Bewegungen der Person oder eine Körperhaltung der Person zu erfassen. Alternativ oder zusätzlich kann die Sensoranordnung ein oder mehrere Mikrofone umfassen, um Geräusche aufzunehmen, welche die Person abgibt oder erzeugt. Beispielsweise kann anhand von Geräuschen eine Gangart der Person ermittelt werden. Weiterhin kann die Sensoranordnung alternativ oder zusätzlich einen Temperatursensor umfassen. Der Temperatursensor kann beispielsweise einen pyroelektrischen Sensor (PIR) umfassen, welcher Temperaturen an einer oder mehreren Stellen des Körpers der Person erfasst. Ferner kann der Temperatursensor in Gegenständen integriert sein, welche die Person berührt, beispielsweise in einer Tastatur oder einer Maus eines Computers oder in einem Lichtschalter des Beleuchtungssystems oder einer Bedienvorrichtung eines Arbeitsgeräts, welches sich im Bereich des Beleuchtungssystems befindet.

Als Eigenschaftsinformation der Person kann beispielsweise eine Temperaturverteilung an dem Körper der Person beispielsweise mittels des Temperatursensors erfasst werden. Alternativ oder zusätzlich kann beispielsweise mit dem Temperatursensor oder einem hochempfindlichen Mikrofon eine Herzfrequenz der Person als die Eigenschaftsinformation bestimmt werden. Mithilfe der Kamera und/oder des Mikrofons kann eine Gangart der Person oder eine Gehgeschwindigkeit der Person als Eigenschaftsinformation ermittelt werden. Die Gangart kann beispielsweise eine Schrittlänge, ein hartes oder weiches Aufsetzverhalten der Füße der Person, ein Schlurfen sowie eine Schrittfrequenz umfassen. Ferner kann mit der Kamera eine Körperhaltung der Person bei unterschiedlichen Tätigkeiten bestimmt werden, beispielsweise beim Lesen oder Schreiben oder bei der Bedienung eines Computers. Beispielsweise kann die Körperhaltung einen Abstand zwischen den Augen der Person und einem betrachteten Gegenstand anzeigen. Weiterhin kann mit der Kamera als eine weitere Eigenschaftsinformation ein Verhaltensmuster der Person ermittelt werden, beispielsweise wie die Person Gegenstände beim Betrachten in Bezug zu dem Leuchtmittel des Beleuchtungssystems anordnet oder wie sich die Person bewegt, beispielsweise beim Aufstehen oder Hinsetzen auf einen Stuhl. Weiterhin kann beispielsweise mithilfe der Kamera als eine weitere Eigenschaftsinformation der Person erfasst werden, ob die Person eine Brille trägt.

In Abhängigkeit von der erfassten Eigenschaftsinformation der Person wird automatisch eine Erkrankung der Person bestimmt. Die Erkrankung kann beispielsweise eine Sehschwäche der Person umfassen, beispielsweise eine Kurzsichtigkeit, eine Weitsichtigkeit oder eine eingeschränkte Farbwahrnehmung, wie zum Beispiel eine Grünblindheit. Weiterhin kann die Erkrankung beispielsweise Bewegungseinschränkungen der Person umfassen, welche beispielsweise krankheitsbedingt oder altersbedingt auftreten können. Derartige Bewegungseinschränkungen können beispielsweise eine eingeschränkte Bewegungsfähigkeit des Kopfes sein. Unter dem Begriff "Erkrankung" sind jedoch auch vorübergehende Einschränkungen der Person zu verstehen, wie beispielsweise eine vorübergehende Sehschwäche durch Müdigkeit.

Anhand der bestimmten Erkrankung der Person wird eine Eigenschaft des Leuchtmittels automatisch eingestellt. Beispielsweise kann eine Helligkeit des von dem Leuchtmittel abgegebenen Lichts in Abhängigkeit von der Erkrankung eingestellt werden. Bei einer festgestellten Kurzsichtigkeit, kann beispielsweise die Helligkeit erhöht werden. Wurde hingegen eine Müdigkeit der Person erkannt, kann beispielsweise die Helligkeit verringert werden, um die Person nicht unnötig zu blenden. Bei einer eingeschränkten Farbwahrnehmung kann beispielsweise eine Farbe des von dem Leuchtmittel abgegebenen Lichts eingestellt werden, um beispielsweise eine farbliche Trennschärfe zu erhöhen. Beispielsweise kann eine Wellenlänge des von dem Leuchtmittel abgegebenen Lichts eingestellt werden. Alternativ oder zusätzlich können mehrere Wellenlängen des von dem Leuchtmittel abgegebenen Lichts eingestellt werden, um somit eine spektrale Verteilung des Lichts einzustellen. Diese spektrale Verteilung kann beispielsweise an bestimmten Stellen Lücken aufweisen, um beispielsweise eine größere Trennschärfe für eine Person mit Grünblindheit bereitzustellen. Ferner kann eine Helligkeitsmodulation des von dem Leuchtmittel abgegebenen Lichts eingestellt werden. Die Helligkeitsmodulation mit bestimmten Frequenzen kann die Person reizen und somit einer Müdigkeit entgegenwirken. Andererseits können bestimmte Modulationsfrequenzen stressfördernd wirken oder psychische Erkrankungen auslösen oder fördern, sodass diese gegebenenfalls zu vermeiden sind. Bei Bewegungseinschränkungen der Person können beispielsweise eine Abstrahlrichtung des von dem Leuchtmittel abgegebenen Lichts oder eine Lichtverteilung des von dem Leuchtmittel abgegebenen Lichts entsprechend eingestellt werden, um eine Ausleuchtung von einem von der Person betrachteten Gegenstand zu verbessern, ohne dass die Person den Kopf oder sich insgesamt bewegen muss.

Gemäß einer Ausführungsform umfasst die Eigenschaftsinformation der Person mehrere Eigenschaften der Person, beispielsweise eine Temperaturverteilung, eine Herzfrequenz und ein Verhaltensmuster der Person. Die mehreren Eigenschaften der Person können beispielsweise mit mehreren unterschiedlichen Sensoren erfasst werden. Die Erkrankung der Person kann in Abhängigkeit von einer kombinierten Betrachtung der mehreren Eigenschaften der Person bestimmt werden.

Bei einer weiteren Ausführungsform wird ein vordefiniertes Beleuchtungsmuster mit dem Beleuchtungssystem erzeugt und eine Reaktion der Person auf das erzeugte vordefinierte Beleuchtungsmuster erfasst. Aus der erfassten Reaktion kann die Eigenschaftsinformation der Person bestimmt werden. Beispielsweise kann ein Lichtspektrum des von dem Beleuchtungssystem abgegebenen Lichts eingestellt oder variiert werden und eine jeweilige Reaktion der Person erfasst und ausgewertet werden, um beispielsweise eine Farbsehschwäche zu bestimmen. Weiterhin kann eine Ausleuchtungscharakteristik des von dem Beleuchtungssystem abgegebenen Lichts geändert werden, beispielsweise eine Variation der Ausleuchtungsstärke in verschiedenen Bereichen rund um die Person, um beispielsweise eine Fehlsichtigkeit, wie zum Beispiel eine Kurzsichtigkeit oder eine Weitsichtigkeit auf einem oder beiden Augen der Person zu bestimmen.

Weiterhin kann eine Benutzereingabe von der Person erfasst werden. Die Benutzereingabe umfasst eine Erkrankung der Person. Die Benutzereingabe kann beispielsweise über einen mit dem Beleuchtungssystem gekoppelten Computer oder über ein mit dem Beleuchtungssystem gekoppeltes mobiles Endgerät, wie zum Beispiel ein Smartphone, mittels einer entsprechenden Anwendung, einer sogenannten App, eingegeben werden. Die von dem Benutzer eingegebene Erkrankung kann zusätzlich zum automatischen Einstellen der Eigenschaft des Leuchtmittels verwendet werden.

Bei einer weiteren Ausführungsform kann die Person anhand von der erfassten Eigenschaftsinformation identifiziert werden. Wenn sich die Person beispielsweise zu einem früheren Zeitpunkt im Beleuchtungsbereich des Leuchtmittels des Beleuchtungssystems befunden hat und eine Eigenschaftsinformation dieser Person erfasst wurde, kann diese Eigenschaftsinformation verwendet werden, um die Person wieder zu identifizieren. Wenn die Person identifiziert wurde, können weitere Eigenschaftsinformationen, welche zuvor für diese Person ermittelt wurden oder von dieser Person über die Benutzereingabe in das Beleuchtungssystem eingegeben wurden, verwendet werden, um eine Eigenschaft des Leuchtmittels geeignet einzustellen.

Alternativ oder zusätzlich kann die Person anhand von einer Kommunikation mit einem mobilen Endgerät, welches der Person zugeordnet ist, identifiziert werden. Das mobile Endgerät kann beispielsweise ein Mobilfunktelefon, insbesondere ein Smartphone, ein tragbarer Computer oder ein Transponder von beispielsweise einem der Person zugeordneten Autoschlüssel sein.

Bei noch einer weiteren Ausführungsform wird die bestimmte Erkrankung an die Person ausgegeben. Die Ausgabe der Erkrankung kann beispielsweise über eine Benutzeroberfläche des Beleuchtungssystems oder über ein mit dem Beleuchtungssystem gekoppeltes Computersystem oder Mobilfunktelefon erfolgen. In Verbindung mit der Ausgabe der Erkrankung an die Person können zusätzlich nützliche Hinweise an die Person ausgegeben werden, wie sie beispielsweise ihren Arbeitsplatz unter Berücksichtigung der Erkrankung und der verfügbaren Leuchtmittel geeignet einrichten kann.

Die vorliegende Erfindung betrifft weiterhin ein Beleuchtungssystem, welches ein Leuchtmittel, eine Sensoranordnung und eine Verarbeitungsvorrichtung umfasst. Die Sensoranordnung ist ausgestaltet, eine Eigenschaftsinformation einer Person, welche sich in einem Beleuchtungsbereich des Leuchtmittels befindet, zu erfassen. Die Verarbeitungsvorrichtung ist ausgestaltet, eine Erkrankung der Person in Abhängigkeit von der erfassten Eigenschaftsinformation der Person automatisch zu bestimmen und eine Eigenschaft des Leuchtmittels in Abhängigkeit von der bestimmten Erkrankung der Person automatisch einzustellen.

Das Beleuchtungssystem ist daher zur Durchführung des zuvor beschriebenen Verfahrens und seiner Ausführungsformen geeignet und umfasst daher auch die zuvor beschriebenen Vorteile.

### KURZBESCHREIBUNG DER FIGUREN

Die vorliegende Erfindung wird nachfolgend unter Bezugnahme auf die beigefügte Zeichnung anhand bevorzugter Ausführungsbeispiele näher erläutert.
Figur 1 zeigt schematisch ein Beleuchtungssystem gemäß einer Ausführungsform der vorliegenden Erfindung in Verbindung mit weiteren Beleuchtungssystemen.
Figur 2 zeigt Verfahrensschritte eines Verfahrens zum Betreiben eines Beleuchtungssystems gemäß einer Ausführungsform der vorliegenden Erfindung.

### DETAILLIERTE BESCHREIBUNG VON AUSFÜHRUNGSBEISPIELEN

Die Erfindung wird nachfolgend anhand von Ausführungsbeispielen unter Bezugnahme auf die Figuren näher beschrieben. Die Merkmale verschiedener Ausführungsbeispiele können miteinander kombiniert werden, sofern dies in der Beschreibung nicht ausdrücklich ausgeschlossen wird. Auch wenn einige Ausführungsbeispiele im Kontext spezifischer Anwendungen, beispielsweise im Kontext einer Beleuchtung unter Verwendung von LED-basierten Leuchtmitteln, näher beschrieben werden, sind diese Ausführungsbeispiele nicht auf diese Anwendungen beschränkt, sondern können auch in Verbindung mit anderen Leuchtmitteln verwendet werden, beispielsweise mit Halogenleuchtmitteln.

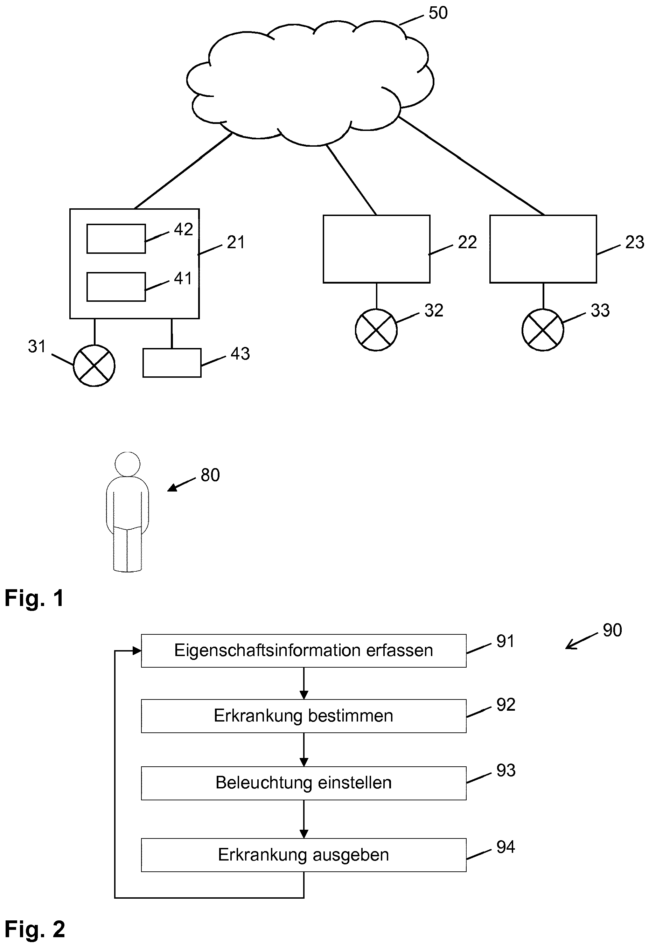

Figur 1 zeigt schematisch ein Beleuchtungssystem 21, welches ein Leuchtmittel 31, eine Verarbeitungsvorrichtung 41 und eine Sensoranordnung 43 umfasst. Das Beleuchtungssystem 21 kann ferner eine Schnittstelle 42 umfassen, mit welcher das Beleuchtungssystem mit einem Kommunikationsnetz 50 koppelbar ist. Das Kommunikationsnetz 50 kann beispielsweise ein drahtgebundenes oder drahtloses Datenkommunikationsnetz umfassen, beispielsweise ein sogenanntes Local Area Network (LAN) oder Wireless Local Area Network (WLAN) oder ein Telekommunikationsnetz gemäß beispielsweise einem GSM oder LTE Standard. Weitere Beleuchtungssysteme 22, 23, welchen entsprechende Leuchtmittel 32 beziehungsweise 33 zugeordnet sind, können über das Kommunikationsnetz 50 mit dem Beleuchtungssystem 21 in Verbindung stehen, um beispielsweise in einem Gebäude, beispielsweise einer Industrieanlage oder einem Bürogebäude, Gebäudeabschnitte, beispielsweise Werkstattarbeitsplätze oder Büroarbeitsplätze, geeignet zu beleuchten. Die Beleuchtungssysteme 22 und 23 können eine gleiche oder ähnliche Ausgestaltung aufweisen wie das Beleuchtungssystem 21, d.h., die Beleuchtungssysteme 22 und 23 können ebenfalls eine entsprechende Verarbeitungsvorrichtung und Sensoranordnung wie das Beleuchtungssystem 21 aufweisen.

Obwohl in Figur 1 nur ein Leuchtmittel 31 gezeigt ist, kann das Beleuchtungssystem 21 mehrere Leuchtmittel 31 aufweisen, welche einen dem Beleuchtungssystem 21 zugeordneten Beleuchtungsbereich ausleuchten. Das Beleuchtungssystem 21 kann ferner ein dem Leuchtmittel 31 zugeordnetes (nicht gezeigtes) Betriebsgerät aufweisen, welches das Leuchtmittel 31 unter der Steuerung der Verarbeitungsvorrichtung 41 mit elektrischer Energie versorgt. Das Betriebsgerät kann beispielsweise einen LED-Konverter, beispielsweise einen Gleichstrom/Gleichstrom (DC/DC)-Wandler umfassen. Das Leuchtmittel 31 kann neben dem eigentlichen lichtabgebenden Leuchtmittel auch Aktoren umfassen, welche in der Figur 1 nicht gezeigt sind. Die Aktoren können beispielsweise eine Ausrichtung des Leuchtmittels verändern oder eine Position des Leuchtmittels verändern, wenn das Leuchtmittel beispielsweise auf einer Schiene verschiebbar montiert ist. Darüber hinaus können beispielsweise ein Abstrahlwinkel oder eine Lichtverteilung des Leuchtmittels 31 einstellbar sein. Weiterhin kann unter der Steuerung der Verarbeitungsvorrichtung 41 eine Farbe des von dem Leuchtmittel 31 abgegebenen Lichts oder ein Wellenlängenspektrum des von dem Leuchtmittel 31 abgegebenen Lichts eingestellt werden. Ferner können beispielsweise eine Helligkeit des von dem Leuchtmittel 31 abgegebenen Lichts sowie eine Helligkeitsmodulation des von dem Leuchtmittel 31 abgegebenen Lichts unter der Steuerung der Verarbeitungsvorrichtung 41 einstellbar sein.

Die Sensoranordnung 43 kann einen oder mehrere Sensoren umfassen, welche physikalische Größen in der Umgebung des Beleuchtungssystems 21 erfassen können. Insbesondere können die Sensoren physikalische Größen einer Umgebung des Beleuchtungssystems 21 erfassen, welche sich auf eine Person 80 beziehen, die sich in einem Beleuchtungsbereich des von dem Leuchtmittel 31 ausgeleuchteten Bereich befindet. Die Person 80 kann beispielsweise eine Person sein, welche an einem Werkstattarbeitsplatz oder einem Büroarbeitsplatz arbeitet, welcher von dem Beleuchtungssystem 21 beleuchtet wird. Die Sensoren können beispielsweise eine Kamera, ein Mikrofon und/oder einen Temperatursensor umfassen. Einige oder alle der Sensoren können in dem Leuchtmittel 31 untergebracht sein. Alternativ können einige oder alle der Sensoren 43 außerhalb des Beleuchtungssystems 21 angeordnet sein oder innerhalb des Beleuchtungssystems 21 in einer Leuchtenkonstruktion oder in einem Betriebsgerät.

Die von den Sensoren erfassten Informationen können an die Verarbeitungsvorrichtung 41 übermittelt werden und von der Verarbeitungsvorrichtung 41 verarbeitet werden. Die Arbeitsweise der Verarbeitungsvorrichtung 41 wird nachfolgend unter Bezugnahme auf die Figur 2 im Detail beschrieben werden.

Figur 2 zeigt Verarbeitungsschritte 91-94 eines Verfahrens 90, welches von der Verarbeitungsvorrichtung 41 durchgeführt werden kann. Im Schritt 91 werden Eigenschaftsinformationen der Person 80 mithilfe der Sensoren der Sensoranordnung 43 und einer entsprechenden Verarbeitung in der Verarbeitungsvorrichtung 41 erfasst. Die Eigenschaftsinformationen umfassen Eigenschaften der Person, wie zum Beispiel eine Temperaturverteilung an dem Körper, eine Herzfrequenz, eine Gehgeschwindigkeit, eine Gangart, eine Körperhaltung oder ein Verhaltensmuster der Person.

Im Schritt 92 wird auf der Grundlage der erfassten Eigenschaftsinformationen der Person 80 eine Erkrankung der Person 80 von der Verarbeitungsvorrichtung 41 bestimmt. Beispielsweise können eine Sehschwäche, wie zum Beispiel eine Kurzsichtigkeit, eine Weitsichtigkeit oder eine Grünblindheit, oder andere Erkrankungen, wie zum Beispiel Bewegungseinschränkungen aus den Eigenschaftsinformationen bestimmt werden. Dazu können die Eigenschaftsinformationen kontinuierlich erfasst und auf Krankheiten hin ausgewertet werden. Auf der Grundlage der Herzfrequenz kann in Verbindung mit einer Erfassung einer Bewegung der Person 80 beispielsweise festgestellt werden, welche Bewegungsabläufe der Person 80 besonders schwer fallen und auf dieser Grundlage auf Erkrankungen des Muskel oder Gelenksapparats geschlossen werden. Auf der Grundlage der Temperaturverteilung des Körpers der Person 80 können beispielsweise Durchblutungsstörungen oder Herz-Kreislauf-Erkrankungen identifiziert werden. Auch ein Müdigkeitszustand der Person 80 kann beispielsweise an der Gangart, der Gehgeschwindigkeit oder der Temperaturverteilung in Verbindung mit der Herzfrequenz bestimmt werden.

Im Schritt 93 wird auf der Grundlage der bestimmten Erkrankung die von dem Beleuchtungssystem 21 erzeugte Beleuchtung entsprechend eingestellt. Beispielsweise kann ein Beleuchtungswinkel oder eine Beleuchtungshelligkeit gemäß der bestimmten Erkrankung eingestellt werden. Bei einer Grünblindheit kann beispielsweise die spektrale Verteilung des von dem Beleuchtungssystem 21 erzeugten Lichts geeignet eingestellt werden, beispielsweise mit Lücken in der spektralen Verteilung, um eine Trennschärfe bei bestimmten Farben zu erhöhen.

Im Schritt 94 kann die bestimmte Erkrankung an die Person 80 ausgegeben werden, beispielsweise über eine Benutzerschnittstelle eines Computersystems oder eines Mobilfunktelefons, welche mit dem Beleuchtungssystem 21 über das Kommunikationsnetz 50 gekoppelt ist.

Insbesondere die Schritte 91-93 können kontinuierlich wiederholt durchgeführt werden. Im Schritt 93 kann die Beleuchtung ferner derart angesteuert werden, dass vordefinierte Beleuchtungsmuster erzeugt werden. Im Schritt 91 wird über die Erfassung der Eigenschaftsinformation dann eine Reaktion der Person 80 auf die erzeugten vordefinierten Beleuchtungsmuster erfasst, um daraus im Schritt 92 eine mögliche Erkrankung der Person 80 zu bestimmen.

Zusätzlich können über eine Benutzerschnittstelle, beispielsweise über ein mobiles Endgerät, wie zum Beispiel ein Smartphone, Benutzereingaben von der Person 80 erfasst werden. Die Benutzereingaben können beispielsweise eine direkte Angabe der Person 80 zu Erkrankungen der Person 80 umfassen oder gewünschte Einstellungen der Beleuchtung umfassen, aus welchen wiederum mögliche Erkrankungen der Person 80 abgeleitet werden können. Beispielsweise kann die Person 80 eine Lichtcharakteristik derart einstellen, wie es für eine kurzsichtige Person typisch ist und daraus eine Kurzsichtigkeit abgeleitet werden.

Die erfasste Erkrankung kann der Person 80 zugeordnet werden und beispielsweise in dem Beleuchtungssystem 21 oder in einem zentralen Server in dem Kommunikationsnetz 50 gespeichert werden. Weitere biometrische Daten der Person 80, welche mit der Sensoranordnung 43 erfasst werden, können ebenfalls der Person 80 zugeordnet werden und in dem Beleuchtungssystem 21 oder dem zentralen Server in dem Kommunikationsnetz 50 gespeichert werden. Diese Informationen können verwendet werden, um das Beleuchtungssystem 21 entsprechend einzustellen, sobald die Anwesenheit der Person 80 in dem Beleuchtungsbereich des Beleuchtungssystems 21 festgestellt wird. Ferner können diese Informationen verwendet werden, um andere Beleuchtungssysteme, beispielsweise das Beleuchtungssystem 22 oder das Beleuchtungssystem 23 entsprechend einzustellen, sobald die Anwesenheit der Person 80 in dem Beleuchtungsbereich des Beleuchtungssystems 22 bzw. 23 festgestellt wird. Eine Identifikation der Person 80 kann auch über eine mobile Vorrichtung erfolgen, welche der Person 80 zugeordnet ist, beispielsweise mithilfe eines Mobilfunktelefons.

Zusammenfassend wird ein Beleuchtungssystem zur Erkennung von Krankheiten und/oder Sehschwächen bereitgestellt. Krankheiten und/oder Sehschwächen können durch eine Vielzahl von Sensordaten erfasst werden und eine Anpassung von Lichteigenschaften kann anhand der erkannten Krankheiten und/oder Sehschwächen erfolgen. Beispielsweise können Lichtfarbe, Helligkeit und Lichtverteilung entsprechend angepasst werden. Die Sensordaten können dabei permanent erfasst und auf Krankheiten und/oder Sehschwächen hin ausgewertet werden. Zusätzlich kann eine definierte Manipulation des Beleuchtungssystems erfolgen, beispielsweise eine Manipulation von Lichteigenschaften, und das Verhalten bzw. eine Reaktion der Person darauf erfasst werden. Beispielsweise kann eine Wellenlänge, eine Frequenz, eine Lichtfarbe oder eine Helligkeit manipuliert werden. Zusätzlich können Personen mit Krankheiten und/oder Sehschwächen dem Beleuchtungssystem, beispielsweise an ihrem Arbeitsplatz ihre Krankheit und/oder Sehschwäche mitteilen. Auf der Grundlage der so ermittelten Krankheiten und/oder Sehschwächen kann das Beleuchtungssystem Eigenschaften des von dem Beleuchtungssystem abgegebenen Lichts optimal einstellen.

## Patentansprüche

1. Verfahren zum Betreiben eines Beleuchtungssystems, umfassend:
- Erfassen (91) einer Eigenschaftsinformation einer Person (80), welche sich in einem Beleuchtungsbereich eines Leuchtmittels (31) des Beleuchtungssystems (21) befindet, mittels einer Sensoranordnung (43) des Beleuchtungssystems (21),
- automatisches Bestimmen (92) einer Erkrankung der Person (80) in Abhängigkeit von der erfassten Eigenschaftsinformation der Person (80), und
- automatisches Einstellen (93) einer Eigenschaft des Leuchtmittels (31) in Abhängigkeit von der bestimmten Erkrankung der Person (80).

2. Verfahren nach Anspruch 1, wobei die Eigenschaftsinformation mehrere Eigenschaften der Person (80) umfasst, wobei die Erkrankung der Person (80) in Abhängigkeit von einer kombinierten Betrachtung der mehreren Eigenschaften der Person (80) bestimmt wird.

3. Verfahren nach Anspruch 1 oder 2, wobei die Erkrankung der Person (80) eine Sehschwäche der Person (80) umfasst.

4. Verfahren nach einem der vorhergehenden Ansprüche, wobei das Erfassen (91) der Eigenschaftsinformation der Person umfasst:
- Erzeugen eines vordefinierten Beleuchtungsmusters mit dem Beleuchtungssystem (21), und
- Erfassen einer Reaktion der Person (80) auf das erzeugte vordefinierte Beleuchtungsmuster.

5. Verfahren nach einem der vorhergehenden Ansprüche, ferner umfassend:
- Erfassen einer Benutzereingabe von der Person (80), wobei die Benutzereingabe eine Erkrankung der Person (80) umfasst.

6. Verfahren nach einem der vorhergehenden Ansprüche, ferner umfassend:
- Identifizieren der Person (80) anhand von der erfassten Eigenschaftsinformation.

7. Verfahren nach einem der vorhergehenden Ansprüche, ferner umfassend:
- Identifizieren der Person (80) anhand von einer Kommunikation mit einem mobilen Gerät, welches der Person (80) zugeordnet ist.

8. Verfahren nach einem der vorhergehenden Ansprüche, wobei die Eigenschaftsinformation der Person (80) mindestens eine Eigenschaft aus einer Gruppe von Eigenschaften umfasst, wobei die Gruppe von Eigenschaften umfasst:
- eine Temperaturverteilung an dem Körper der Person (80),
- eine Herzfrequenz der Person (80),
- eine Gehgeschwindigkeit der Person (80),
- eine Gangart der Person (80),
- eine Körperhaltung der Person (80), und
- ein Verhaltensmuster der Person (80).

9. Verfahren nach einem der vorhergehenden Ansprüche, wobei die Sensoranordnung (43) mindestens einen Sensor aus einer Gruppe von Sensoren umfasst, wobei die Gruppe von Sensoren umfasst:
- eine Kamera,
- ein Mikrofon, und
- einen Temperatursensor.

10. Verfahren nach einem der vorhergehenden Ansprüche, ferner umfassend:
- Ausgeben der bestimmten Erkrankung an die Person (80).

11. Verfahren nach einem der vorhergehenden Ansprüche, wobei das Einstellen der Eigenschaft des Leuchtmittels (31) eine Einstellung aus einer Gruppe von Einstellungen umfasst, wobei die Gruppe von Einstellungen umfasst:
- Einstellen einer Farbe des von dem Leuchtmittel (31) abgegebenen Lichts,
- Einstellen einer Wellenlänge des von dem Leuchtmittel (31) abgegebenen Lichts,
- Einstellen einer Helligkeitsmodulation des von dem Leuchtmittel (31) abgegebenen Lichts,
- Einstellen einer Helligkeit des von dem Leuchtmittel (31) abgegebenen Lichts,
- Einstellen einer Abstrahlrichtung des von dem Leuchtmittel (31) abgegebenen Lichts, und
- Einstellen einer Lichtverteilung des von dem Leuchtmittel (31) abgegebenen Lichts.

12. Beleuchtungssystem umfassend:
- ein Leuchtmittel (31),
- eine Sensoranordnung (43) zum Erfassen einer Eigenschaftsinformation einer Person (80), welche sich in einem Beleuchtungsbereich des Leuchtmittels (31) befindet, und
- eine Verarbeitungsvorrichtung (41), welche ausgestaltet ist,
eine Erkrankung der Person (80) in Abhängigkeit von der erfassten Eigenschaftsinformation der Person (80) automatisch zu bestimmen, und
eine Eigenschaft des Leuchtmittels (31) in Abhängigkeit von der bestimmten Erkrankung der Person (80) automatisch einzustellen.

13. Beleuchtungssystem nach Anspruch 12, wobei das Beleuchtungssystem (21) zur Durchführung des Verfahrens (90) nach einem der Ansprüche 1-11 ausgestaltet ist.
